(19) Europäisches Patentamt / European Patent Office / Office européen des brevets

(11) **EP 2 484 230 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**24.01.2024   Patentblatt 2024/04**

(45) Hinweis auf die Patenterteilung:
**17.05.2017   Patentblatt 2017/20**

(21) Anmeldenummer: **11000871.1**

(22) Anmeldetag: **03.02.2011**

(51) Internationale Patentklassifikation (IPC):
**A23L 5/43** $^{(2016.01)}$          **A23L 5/40** $^{(2016.01)}$
**A23L 33/10** $^{(2016.01)}$          **A23L 5/46** $^{(2016.01)}$
**A23L 33/105** $^{(2016.01)}$          **A23L 17/60** $^{(2016.01)}$
**C09B 61/00** $^{(2006.01)}$

(52) Gemeinsame Patentklassifikation (CPC):
**C09B 61/00; A23L 5/40; A23L 5/43; A23L 5/46;
A23L 17/60; A23L 33/105**

(54) **Proteinreiche Spirulina-Extrakte**

Protein-rich spirulina extracts

Extrait de spiruline riche en protéines

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.08.2012   Patentblatt 2012/32**

(73) Patentinhaber: **ADM WILD Europe GmbH & Co. KG**
**69214 Eppelheim (DE)**

(72) Erfinder:
- **Heyde, Annett**
  **13158 Berlin (DE)**
- **Schiffelbein, Olga**
  **12279 Berlin (DE)**
- **Christiansen, Christian**
  **13599 Berlin (DE)**

(74) Vertreter: **Grünecker Patent- und Rechtsanwälte PartG mbB**
**Leopoldstraße 4**
**80802 München (DE)**

(56) Entgegenhaltungen:
EP-A1- 1 798 262          RU-C1- 2 320 195
US-A- 4 851 339          US-A1- 2006 210 545
US-A1- 2008 260 692

- MINKOVA K M; TCHERNOV A A; TCHORBADJIEVA M I; FOURNADJIEVA S T; ANTOVA R E; BUSHEVA M C: "Purification of C-phycocyanin from Spirulina (Arthrospira) fusiformis", JOURNAL OF BIOTECHNOLOGY 2003 INST. OF PLANT PHYSIOL, Bd. 102, Nr. 1, 2003, Seiten 55-59, XP002641956,
- DATABASE WPI Week 200914 Thomson Scientific, London, GB; AN 2009-E91586 XP002641957, & CN 101 348 754 A (TSINGTAO BREWERY GROUP) 21. Januar 2009 (2009-01-21)
- PATIL G. et al.: "Method to obtain C-phycocyanin of high purity", Journal of Chromatography A, vol. 1127, no. 1-2, 15 September 2006 (2006-09-15), pages 76-81,

EP 2 484 230 B2

## Beschreibung

Die vorliegende Erfindung betrifft eine Zusammensetzung, umfassend einen Extrakt aus Spirulina, die zur Herstellung von Lebensmitteln und Halbfertigerzeugnissen für Lebensmittel geeignet ist.

Es besteht ein großes Interesse daran, Lebensmittel nicht nur geschmacklich sondern auch optisch ansprechend anzubieten. Die Farbe des Lebensmittels stellt in diesem Zusammenhang für den Konsumenten ein wichtiges Auswahlkriterium dar. Lebensmittel, die von Natur aus wenig eigene Farbe besitzen, werden deshalb oft mit Farbstoffen versetzt, um sie für den Konsumenten ansprechend zu gestalten. Weiterhin können Farbstoffe dazu dienen, dass die bei der Herstellung, Verarbeitung oder Lagerung auftretenden Farbveränderungen oder -verluste ausgeglichen werden. Somit ist eine gleichbleibende optische Qualität des Produkts gewährleistet.

Unter den für Lebensmittel üblicherweise verwendeten Farbstoffen kann zwischen synthetischen und natürlichen Farbstoffen unterschieden werden. Zu den wichtigsten synthetischen Lebensmittelfarbstoffen gehören Gelborange S, Chinolingelb, Azorubin, Alluarot, Tartrazin und Chochenillerot. Allerdings stehen diese Farbstoffe unter Verdacht, Aufmerksamkeitsdefizit-Hyperaktivitätsstörung (ADHS) bei Kindern auszulösen. Des weiteren können diese Farbstoffe Allergien und allergieähnliche Symptome auslösen. Nicht zuletzt stehen die Azofarbstoffe im Verdacht, krebserregend zu sein, weil bei der Verstoffwechselung kanzerogene Arylaminkomponenten freigesetzt werden können. Vor dem Hintergrund dieser Gesundheitsrisiken, der strenger werdenden Lebensmittelvorschriften und des zunehmenden Gesundheitsbewusstseins der Konsumenten geht der Trend immer mehr dahin, natürliche Farbstoffe zu verwenden.

Insbesondere im Hinblick auf die Farben Blau und Grün stellt dies jedoch eine besondere Herausforderung dar. Als natürliche blaue Farbstoffe können z. B. Anthocyane verwendet werden. Jedoch ist die Farbe der Anthocyane stark pH-Wert abhängig. So liegen Anthocyane üblicherweise bei einem pH-Wert im sauren Bereich, wie z. B. in Getränken üblich, rot vor. Eine Blaufärbung wird erst bei einem höheren pH-Wert erreicht. Zudem sind Anthocyane wasserlöslich und bluten bei Verwendung als Lebensmittelfarbstoff leicht aus. Dieser Nachteil kann jedoch durch Verlackung der Anthocyane überwunden werden. Dabei wird das Anthocyan auf einem Träger, üblicherweise Aluminiumhydroxid, aufgebracht. Die aus Anthocyanen gebildeten Aluminiumlacke weisen eine blaue Farbe auch in einem sauren pH-Bereich auf und bluten nicht aus. Bei einem solchen Farbstoff handelt es sich zwar laut Deklaration um einen natürlichen Farbstoff, jedoch sind relativ hohe Gehalte an Aluminium vorhanden. Da Aluminium unter dem Verdacht steht, Alzheimer auszulösen, erfüllt auch ein solcher blauer Farbstoff nicht die Ansprüche der Konsumenten.

Zur Herstellung von grünen Farbstoffen werden entweder blaue Farbstoffe mit gelben Farbstoffen gemischt oder Chlorophylle (E140), Kupferchlorophylle (E141) und die verseiften Chlorophylline und Kupferchlorophylline verwendet. Kupferchlorophylle kommen jedoch nicht natürlich vor, sondern werden durch Umsetzung von Magnesiumchlorophyll mit Kupfersalzen synthetisch hergestellt und erfüllen wiederum nicht die Ansprüche des Verbrauchers. Natürliche Magnesiumchlorophylle und Magnesiumchlorophylline sind üblicherweise in vielen sauren Applikationen ungenügend stabil und müssen außerdem mit synthetischen Emulgatoren wasserlöslich formuliert werden.

Es besteht daher ein Bedürfnis nach einem rein natürlichen blauen oder grünen Farbstoff.

Im Hinblick auf einen blauen Farbstoff ist die Spirulinaalge, z. B. *Spirulina platensis* (*syn. Arthrospira platensis*), von besonderem Interesse. Diese blaugrüne Mikroalge ist sowohl als Nahrungsergänzungsmittel als auch als Rohstoff für Lebensmittelfarbe bekannt. Spirulina ist reich an Protein (64 bis 74 Gew.-% an der Trockenmasse), 6 bis 13 Gew.-% Lipide, wovon etwa die Hälfte Fettsäuren sind und etwa 12 bis 20 Gew.-% Kohlenhydrate (A. Vonshak, "Spirulina platensis (Arthrospira)", Taylor & Francis 1997, Kapitel 10, Seiten 175 bis 204).

Die hauptsächlich in Spirulina vorkommenden Pigmente sind zwei blaue, wasserlösliche Biliproteine, c-Phycocyanin und Allophycocyanin, die unter dem Begriff Phycocyanin zusammengefasst werden, grüne Chlorophylle und gelbe Xantophylle. Der Gesamtphycocyaningehalt in Spirulina-Trockenmasse lässt sich photometrisch aus zwei Extinktionen nach folgender Formel bestimmen:

$$C_{PC} = C_{cPC} + C_{APC}$$

$$C_{PC}\ [\text{mg/g}] = F\ \{(0{,}162 * E_{620nm} - 0{,}098 * E_{650nm}) + (0{,}180 * E_{650nm} - 0{,}042 * E_{620nm})\}\ /\ EW$$

wobei $C_{PC}$ den Gesamtphycocyaningehalt angibt, $C_{cPC}$ den Gehalt an c-Phycocyanin und $C_{APC}$ den Gehalt an Allophycocyanin, E die Extinktion bei der gegebenen Wellenlänge ist, EW der Einwaage in g in 100 ml eines 50 mM Phosphatpuffers bei pH 6 entspricht und F ein Vielfaches einer gegebenenfalls notwendigen weiteren Verdünnung des Puffers ist (N. Yoshikawa, A. Belay, "Single Laboratory Validation of a Method for the Determination of c-Phycocyanin and Allophycocyanin in Spirulina (Arthrospira) Supplements and Raw Materials by Spectrophotometry", J. AOAC Int. 2008, 91 (3), Seiten 524 bis 529).

Nach dieser Analysenmethode beträgt der Gesamtphycocyaningehalt an der Spirulina-Trockenmasse 6 bis 10 Gew.-% bezogen auf die Spirulina-Trockenmasse.

Das Gesamtprotein in Lebensmitteln wird gewöhnlich indirekt über den Gehalt an Stickstoff nach der Kjeldahl-Methode bestimmt. Dabei wird anorganischer und organischer Stickstoff mit Schwefelsäure an einem $CuSO_4/TiO_2$-Katalysator zu Ammoniak konvertiert, der abdestilliert und zur Quantifizierung titriert wird. Um den Proteingehalt zu bestimmen, wird vorausgesetzt, dass 16% eines Proteins aus Stickstoff bestehen. Der Stickstoffgehalt der Probe wird daher mit dem Faktor 100/16=6,25 in einen Gesamtproteingehalt umgerechnet (R. E. Wrolstad et al, "Handbook of Analytical Chemistry, Measurement of Protein Content - Determination of total nitrogen", John Wiley & Sons, 2000-2005, Seite 105; ibd. "Extraction and measurement of Total Lipids", Seite 425).

Das Gesamtprotein wird nach der Kjeldahl-Methode in der Spirulina-Alge auf 60 bis 70 Gew.-% an der Trockenmasse bestimmt und entspricht den Literaturangaben. Die in Spirulina vorhandenen übrigen, nativen nichtblauen Proteine (nBP) werden durch Differenzbildung aus Gesamtprotein (auch als Kjeldahl-Protein bezeichnet) und Phycocyanin bestimmt:

$$nBP \ [Gew.-\%] = Gesamtproteingehalt \ [Gew.-\%] - Phycocyaningehalt \ [Gew.-\%]$$

Entsprechend sind in den erfindungsgemäß verwendeten Spirulinarohwaren 8 bis 13 Gew.-% des Gesamtproteins Phycocyanin und die übrigen 87 bis 92 Gew.-% nichtblaue Proteine.

Die blaugrüne Mikroalge *Spirulina platensis* wird als Nahrungsergänzungsmittel oder als Rohstoff für Lebensmittelfarbe verwendet. Das Nahrungsergänzungsmittel wird als Tablette oder als Pulver in Gelatinekapseln eingenommen. Die Tabletten weisen nur einen schwachen Geruch und Geschmack nach Alge und Meer auf. Die Verwendung der getrockneten Alge zum Färben ist auch in sehr trockenen Lebensmitteln, wie Keksen, Knäckebrot oder Zwieback, möglich. Die Verwendung wässriger Aufschlämmungen und Aufschlüsse der Alge oder in feuchteren Lebensmitteln, wie zum Beispiel Gummibärchen, ist jedoch nachteilig, da sich aufgrund mikrobieller Aktivität ein abstoßender Geruch ausbildet, ein Problem, das auch in der US 2006/210545 beschrieben wird. Da die blauen Phycocyanine schon bei 60 bis 65 °C denaturieren, wodurch die Farbe verloren geht, lassen sich wässrige Aufschlämmungen aus Spirulina-Algenpulver nicht durch Pasteurisieren mikrobiell stabilisieren.

Um mit Spirulina Lebensmittel färben zu können und die mikrobiellen Probleme zu vermeiden, wird gewöhnlich eine Extraktion und Aufreinigung der Phycocyanine durchgeführt. Dabei werden blaufärbende Extrakte hergestellt, die einen möglichst hohen Anteil Phycocyanine an der extrahierten Biomasse aufweisen. Dabei geht jedoch ein Großteil der nativen nichtblauen Proteine verloren. Die Herstellung türkiser oder grünfärbender Extrakte zur Färbung von Lebensmitteln wird nicht beschrieben.

Reines Phycocyanin wird insbesondere in Japan als natürliches Färbemittel für Lebensmittel und Kosmetika verwendet. So beschreibt die JP 56-086958 eine Extraktion von Spirulina und Behandeln des Extrakts mit einem organischen Lösungsmittel, um Phycocyanin auszufällen und in eine wenig wasserlösliche Form zu überführen.

Herrera et al. (J. Appl. Phycol. 1989, 4, Seite 325 bis 331) beschreibt ein Verfahren, bei dem die Algenbiomasse mit verschiedenen wässrigen Salzlösungen extrahiert wird. Bei Verwendung von Natriumnitratlösungen wird der höchste Gehalt an Phycocyanin erhalten; die höchste Reinheit von Phycocyanin wird durch Extraktion mit Calciumchlorid erhalten. Nach Behandeln mit Aktivkohle und Ultrafiltration werden 90 % reines Pigment erhalten.

Bei beiden beschriebenen Verfahren gehen jedoch die nativen, nichtblauen Proteine verloren.

Die Druckschrift WO 03/080811 beschreibt denaturierte Spirulina und ein Verfahren zur Herstellung davon. Die erhaltene denaturierte Algenmaische aus Spirulina ist gut wasserlöslich, hat einen angenehmen Geschmack und weist eine leicht blaue oder rosa-pink Farbe auf. In dieser Druckschrift wird jedoch ein Extrakt erhalten, der nur noch eine sehr leichte Farbe besitzt und somit zum Färben von Lebensmitteln nicht geeignet ist.

Die Druckschrift EP 1 798 262 beschreibt einen blauen Lack, der natürliche Farbstoffe enthält. Diese natürlichen Farbstoffe können u. a. aus Spirulina extrahiert werden. Allerdings wird in dieser Druckschrift der natürliche Farbstoff mit einem unlöslichen Träger verlackt. Insbesondere wird als Träger Aluminiumhydroxid verwendet. Aufgrund der möglichen Auslösung von Alzheimer durch Aluminium ist jedoch ein solcher Extrakt insbesondere im Hinblick auf das Gesundheitsbewusstsein des Konsumenten ungeeignet.

Die Druckschrift WO 03/099039 betrifft ein Getränk, das mit einem fluoreszierenden Mittel, wie zum Beispiel Phycocyaninen, gefärbt werden kann. Das dabei verwendete Phycocyanin wird aus *Anabaena cylindrica* und Spirulina extrahiert. In dieser Druckschrift wird jedoch nur reines Phycocyanin verwendet, während die ernährungstechnisch hochwertigen nichtblauen Proteine der Alge verworfen werden.

Die Druckschrift DE 100 59 107 beschreibt Extrakte aus Spirulina und ihre Verwendung in kosmetischen und dermatologischen Mitteln zur Haut- und Körperpflege. In dem beschriebenen Extraktionsverfahren wird Spirulina unter schonenden Bedingungen sprühgetrocknet und mit heißem destilliertem bzw. mineralstoffhaltigem Wasser oder einem Gemisch aus Wasser und einem ein- oder mehrwertigem Alkohol extrahiert und mittels Filtration oder Separation abgetrennt. Der resultierende Extrakt wird einer Ultrafiltration unterworfen und mit einem Konservierungsmittel stabilisiert.

Die beschriebenen Extrakte weisen jedoch nur eine gelblichbraune Farbe auf und sind transparent. Daher sind die so erhaltenen Extrakte nicht zur Färbung von Lebensmitteln geeignet.

Die Druckschrift JP 2003-342489 betrifft die Gewinnung eines Extraktes, der reich an blauem Phycocyanin ist, durch den Zusatz eines basischen Ca-Salzes in eine wässrige Suspension von Blaugrün-Alge und Abtrennung des Niederschlages.

Die Druckschrift JP 2004-027041 beschreibt zur Gewinnung eines phycocyaninreichen Extraktes mit brilliantem Farbton die Zugabe von Phosphorsäure in eine wässrige Suspension von Blau-Grün-Algen und dann die Fällung des Phosphats als Calciumphosphat durch Zugabe eines Calciumsalzes.

Die Druckschrift JP 2006-230272 beschreibt die Gewinnung von Phycocyanin mit hoher Reinheit. Dabei wird die Alge in Wasser aufgeschlämmt, mit Calciumionen versetzt und das Calcium dann als bei neutralem pH unlösliches Calciumphosphat gefällt und entfernt. Durch die Fällung lassen sich unerwünschte Verunreinigungen entfernen.

Auch in diesen drei Druckschriften werden jedoch die nichtblauen Proteine verworfen.

Aufgabe der vorliegenden Erfindung ist es, eine Zusammensetzung zur Verfügung zu stellen, die neben Phycocyaninen auch natives, nichtblaues Proteinmaterial enthält, die stabil, blau bis grün färbend und geschmacks- und geruchsneutral ist.

Diese Aufgabe wird durch eine Zusammensetzung gelöst, die einen Extrakt aus Spirulina umfasst, welcher mindestens ein nichtblaues Protein und mindestens ein Phycocyanin enthält, dadurch gekennzeichnet, dass der Anteil an Phycocyanin 16 bis 40 Gew.-%, bezogen auf den Gesamtproteingehalt, der Phycocyaningehalt 0,5 bis 2 Gew.-%, bezogen auf die Gesamtzusammensetzung und der Gesamtproteingehalt der Zusammensetzung 5 bis 20 Gew.-%, bezogen auf die Gesamtzusammensetzung, beträgt. Diese Aufgabe wird auch durch ein Verfahren zur Herstellung der erfindungsgemäßen Zusammensetzung gelöst, das dadurch gekennzeichnet ist, dass

• Spirulinapulver in Wasser zu einer Suspension aufgeschlämmt wird,

• die Suspension unter Durchleiten von Luft gerührt wird und

• die festen Bestandteile der Suspension anschließend abgetrennt werden,

um einen Rohextrakt zu erhalten.

Die Aufgabe wird ebenfalls durch die Verwendung der erfindungsgemäßen Zusammensetzung zur Färbung von Lebensmitteln gelöst.

Bevorzugte Ausführungsformen sind in den Unteransprüchen 2 bis 4, 6 bis 8 und 10 beschrieben.

Erfindungsgemäß wird unter dem Begriff "nichtblaues Protein" alle neben Phycocyanin in der Spirulinaalge vorhandenen Proteine verstanden.

Unter "stabil" wird erfindungsgemäß verstanden, dass die erfindungsgemäße Zusammensetzung über einen Zeitraum von bis zu 12 Monaten bei Lagerung zwischen 4 und 10 °C keine Farbänderung aufweist, nicht geliert oder Ausfällungen bildet.

Erfindungsgemäß wird unter dem Begriff "geruchs- und geschmacksneutral" verstanden, dass die erfindungsgemäße Zusammensetzung den Geruch und Geschmack des Lebensmittels, zu dessen Herstellung sie verwendet wird, nicht verändert.

Unter dem Begriff "Extrakt" wird erfindungsgemäß ein Produkt verstanden, dass durch Extraktion mit einem Lösungsmittel, wie z. B. Wasser oder wässrige Lösungen von Alkohol, in einer dem Fachmann bekannten Weise, z. B. Mazeration oder Perkolation, erhalten wird.

Der Extrakt wird aus Spirulina, einer Gattung der Cyanobakterien, gewonnen. Dazu zählen:

- *Spirulina platensis*
- *Spirulina fusiformis*
- *Spirulina maxima.*

In einer bevorzugten Ausführungsform in Verbindung mit einer der oben oder unten genannten Ausführungsformen wird der Extrakt aus *Spirulina platensis* gewonnen.

Der Extrakt wird durch dem Fachmann bekannte Extraktionsverfahren aus Spirulinapulver hergestellt. Spirulinapulver wird erhalten, indem die Spirulinaalge getrocknet und zerkleinert wird.

In einem blauen oder türkisen Extraktkonzentrat beträgt der Phycocyaningehalt, bezogen auf den Gesamtproteingehalt, bevorzugt 20 Gew.-% bis 30 Gew.-%.

In einer weiteren bevorzugten Ausführungsform in Verbindung mit einer der oben oder unten genannten Ausführungsformen beträgt das Gewichtsverhältnis von nichtblauen Protein zu Phycocyanin 3:1 bis 5:1.

Ferner enthält die erfindungsgemäße Zusammensetzung in einer bevorzugten Ausführungsform in Verbindung mit einer der oben oder unten genannten Ausführungsformen 0,8 bis 1,2 Gew.-% Phycocyanin, bezogen auf die Gesamtzusammensetzung.

In einer weiteren bevorzugten Ausführungsform in Verbindung mit einer der oben oder unten genannten Ausführungsformen beträgt der Gesamtproteingehalt der Zusammensetzung bevorzugt 5 bis 15 Gew.-%, insbesondere 8 bis 10 Gew.-%, bezogen auf die Gesamtzusammensetzung.

Weiterhin kann die erfindungsgemäße Zusammensetzung in einer bevorzugten Ausführungsform in Verbindung mit einer der oben oder unten genannten Ausführungsformen mindestens ein Chlorophyll enthalten. Besonders bevorzugt enthält die Zusammensetzung Chlorophyll a. Vorzugsweise stammt das in der Zusammensetzung enthaltene Chlorophyll ebenfalls aus Spirulina.

Die erfindungsgemäße Zusammensetzung enthält in einer bevorzugten Ausführungsform in Verbindung mit einer der oben oder unten genannten Ausführungsformen 0,01 bis 0,3 Gew.-% Chlorophyll, bezogen auf die Gesamtzusammensetzung. Besonders bevorzugt beträgt der Chlorophyllgehalt 0,05 bis 0,25 Gew.-%, bezogen auf die Gesamtzusammensetzung, insbesondere 0,1 bis 0,2 Gew.-%. Bevorzugt beträgt der Chlorophyllgehalt für grüne Extrakte 0,1 bis 0,2 Gew.-%, bezogen auf die Gesamtzusammensetzung. Türkise Extraktkonzentrate enthalten vorzugsweise 0,01 bis 0,02 Gew.-% Chlorophyll, bezogen auf die Gesamtzusammensetzung, insbesondere 0,015 Gew.-%.

Blaue Extrakte enthalten keine ohne zusätzliche Anreicherungsschritte messbaren Mengen Chlorophyll mehr. Der Chlorophyllgehalt in einem erfindungsgemäßen blauen Extrakt ist kleiner 0,002 Gew.-%, bezogen auf die Gesamtzusammensetzung.

Der Chlorophyllgehalt wird wie folgt bestimmt:

0,1 g Algenpulver oder 2 ml Extraktkonzentrat werden in 4 ml Wasser suspendiert, mit 96%igem Ethanol auf 100 ml aufgefüllt und 60 min unter Rühren bei Raumtemperatur extrahiert. Der Extrakt wird über einen Faltenfilter gegeben und 2 ml Filtrat werden in eine 1 cm Küvette überführt. In einem Photometer wird die Extinktion ($E_{660nm}$) bei 660 nm gegen 96%iges Ethanol bestimmt. Der Chlorophyllgehalt $C_{chloro}$ in g/kg errechnet sich aus der Extinktion bei 660 nm ($E_{660nm}$) gegen 96%iges Ethanol, der Einwaage EW in g und, sollte die Extinktion nicht <1 sein, einer notwendigen Verdünnung des Filtrats um F nach:

$$C_{Chloro} \ [g/kg] = E_{660nm} \ x \ F \ /EW \ [g]/577$$

Ferner kann die erfindungsgemäße Zusammensetzung in einer bevorzugten Ausführungsform in Verbindung mit einer der oben oder unten genannten Ausführungsformen als weitere Zusatzstoffe Säuerungsmittel, wie Zitronensäure oder Tri-Natrium-Citrat, Geschmacksstoffe, Aromastoffe, Konservierungsstoffe, wie Kaliumsorbat, Frucht- und Pflanzenextrakte und deren Konzentrate, z. B. aus Carthamus tinctorius Blütenblättern, Gardenia Jasminoides Beeren, Safflowerblütenblättern oder Gardeniagelb, Süßungsmittel, Antioxidationsmittel, wie Ascorbinsäure, Carotinoide, sowie Kombinationen aus zwei oder mehr Zusatzstoffen enthalten.

Die erfindungsgemäße Zusammensetzung besitzt in einer bevorzugten Ausführungsform in Verbindung mit einer der oben und unten genannten Ausführungsformen 50 bis 75 °Bx, besonders bevorzugt 65 bis 70 °Bx. Der grüne Extrakt besitzt vorzugsweise 50 °Bx.

In dem erfindungsgemäßen Verfahren wird Spirulinapulver in Wasser zu einer Suspension aufgeschlämmt, die Suspension unter Durchleiten von Luft gerührt und anschließend werden die festen Bestandteile der Suspension abgetrennt. In einer bevorzugten Ausführungsform in Verbindung mit einer der oben oder unten genannten Ausführungsformen beträgt das Gewichtsverhältnis von Spirulina zu Wasser 1:20 bis 1:40, besonders bevorzugt 1:30. Vorzugsweise wird die Suspension für 3 bis 36 h bei 5 bis 30 °C mazeriert, besonders bevorzugt für 5 bis 18 h bei 5 bis 20 °C. Die Aufschlämmung erfolgt vorzugsweise mit einer Rotor-Stator-Dispergiereinheit.

Durch diese Verfahrensweise wird die typische unangenehme Geruchsentwicklung verhindert.

Ferner werden in dem erfindungsgemäßen Verfahren in einer bevorzugten Ausführungsform in Verbindung mit einer der oben oder unten genannten Ausführungsformen die festen Bestandteile in einer Zentrifuge, über Schichtenfilter und/oder Mikrofiltration abgetrennt.

In einer bevorzugten Ausführungsform in Verbindung mit einer der oben oder unten genannten Ausführungsformen wird der erhaltene Rohextrakt zur weiteren Aufreinigung filtriert, mit einem Stabilisator versetzt und in einem Verdampfer bei einer Temperatur von 50 bis 70 °C bei 10 bis 100 mbar zu einem Konzentrat eingedampft. Die Brüden werden anschließend verworfen. Als Stabilisator wird bevorzugt Saccharose und Invertzucker verwendet. Das Konzentrat kann anschließend mit einem Trägermaterial, wie Maltodextrin, versetzt und sprühgetrocknet werden.

Der grüne Extrakt wird vorzugsweise in dem erfindungsgemäßen Verfahren nur zentrifugiert und aufkonzentriert.

In einer bevorzugten Ausführungsform in Verbindung mit einer der oben oder unten genannten Ausführungsformen wird zur Filtration des Rohextrakts ein kommerzieller Schichtenfilter verwendet, wie z. B. ein Schichtenfilter der K-Reihe von Pall Seitz Schenk, D-74564 Crailsheim. Vorzugsweise wird eine Klärfiltration und/oder eine Sterilfiltration durchgeführt. Die Porengröße des Schichtenfilters beträgt vorzugsweise 2 bis 7 μm für die Klärfiltration und kleiner 0,8 μm für die Sterilfiltration.

Die erfindungsgemäße Zusammensetzung wird zur Herstellung von Lebensmitteln verwendet. Bevorzugt wird die erfindungsgemäße Zusammensetzung zur Herstellung von gefärbten Getränken, Milchwaren, Eis, Süßwaren oder Überzüge für Dragiergut, wie z. B. Schokoladenkerne, Nüsse, Kaugummi und Zuckerperlen, verwendet.

Vorzugsweise enthält das Lebensmittel 0,1 bis 2 Gew.-%, besonders bevorzugt 0,2 bis 1,5 Gew.-% der erfindungsgemäßen Zusammensetzung, bezogen auf das Lebensmittel.

Überraschenderweise enthält die erfindungsgemäße Zusammensetzung einen hohen Gehalt an nativem, nichtblauen Proteinmaterial aus Spirulina. Des weiteren weist die Zusammensetzung keine Ausfällungen auf und geliert nicht und ist ohne Zusatz von Emulgatoren wasserlöslich.

Beim Färben von Lebensmitteln, insbesondere Lebensmittel mit einem Restfeuchtegehalt von mindestens 20 Gew.-%, bezogen auf das Lebensmittel, mit der erfindungsgemäßen Zusammensetzung tritt kein schlechter Geruch oder Eigengeschmack, und die Farbe ist für 1 Jahr bei 20 °C stabil.

Die vorliegende Erfindung wird durch die folgenden Beispiele näher erläutert.

## BEISPIELE

### Vergleichsbeispiel 1: Herstellung eines Spirulina-Grün-Extrakts

18,5 g Spirulinaalgenpulver (17,7 g Algentrockenmasse, 0,8 g Restfeuchte) werden in 555 g kaltem Wasser in einem kühlbaren Doppelmantelgefäß aufgeschlämmt, 1 min bei 7600 Umdrehungen pro Minute gerührt (IKA Ultraturrax T50, Mittelfein) und unter vorsichtigem Durchleiten von Luft (Aquariumpumpe Elite 802, Hagen Deutschland, 25488 Holm) für 4 h bei 15 °C kontinuierlich gerührt. Danach wurde bei 5 °C für 16 h ohne Rühren unter kontinuierlichem Durchleiten von Luft mazeriert. Die festen Bestandteile werden in einer Zentrifuge abgetrennt, der erhaltene Dünnextrakt mit 38,2 g Saccharose versetzt und zu 100 g Konzentrat mit 50 °Bx eingedampft.

Im Extraktkonzentrat sind 0,92 Gew.-% Phycocyanin enthalten, der Gesamt-Proteingehalt beträgt 9,6 Gew.-%. Das Gewichtsverhältnis von nichtblauen Protein (9,6 Gew.-% - 0,92 Gew.-% = 8,68 Gew.-%) zu Phycocyanin (0,92 Gew.-%) beträgt 8,68/0,92 = 9,45:1, der Anteil des Phycocyanins am Gesamtprotein also 0,92/9,6 = 9,6 Gew.-%. Ferner wird im Algenpulver enthaltenes Chlorophylls extrahiert und bleibt im Extraktkonzentrat. Der Chlorophyllgehalt beträgt 0,15 Gew.-%, bezogen auf den Gesamtextrakt. In Kombination mit dem blauen Phycocyanin ergibt sich so ein grüner Extrakt.

### Beispiel 2 Herstellung eines Spirulina-Türkis-Extrakts

40 g Spirulinaalgenpulver (38,24 g Algentrockenmasse, 1,76 g Restfeuchte) werden in 1,27 l kaltem Wasser aufgeschlämmt und kurz gerührt. Unter vorsichtigem Durchleiten von Luft wird für 16 h bei 10 °C mazeriert. Die festen Bestandteile werden in einer Zentrifuge abgetrennt und man erhält einen Dünnextrakt. Dieser wird über Schichtenfilter der Firma Pall Seitz Schenk K100 und KS50 filtriert. Anschließend wird der Extrakt mit 58 g invertiertem Zuckersirup mit 78 °Bx versetzt und zu 100 g Konzentrat mit 70 °Bx eingedampft.

Der Phycocyaningehalt im Extraktkonzentrat beträgt 1,7 Gew.-%, der Gesamtproteingehalt 7,7 Gew.-%. Das Gewichtsverhältnis von nichtblauem Protein (7,7 Gew.-% - 1,7 Gew.-% = 6 Gew.-%) zu Phycocyanin beträgt 6:1,7 = 3,5:1, der Anteil des Phycocyanins am Gesamtprotein also 1,7/7,7 = 22 Gew.-%. Der Chlorophyllgehalt im Extraktkonzentrat beträgt 0,015 Gew.-%, bezogen auf den Gesamtextrakt. In Kombination mit dem Phycocyanin ergibt sich so eine türkise Farbe des Extraktes.

### Beispiel 3: Herstellung eines Spirulina-Blau-Extrakts

Der nach Beispiel 2 hergestellte türkise Dünnextrakt wird über Seitz Schichtenfilter EKS filtriert. Anschließend wird der Extrakt mit 58 g Invertzuckersirup mit 78 °Bx versetzt und zu 100 g Konzentrat mit 70 °Bx eingedampft.

Durch die zusätzliche, besonders feine Entkeimungsfiltration werden die letzten Reste an Chlorophyll entfernt.

Der Phycocyaningehalt im Extraktkonzentrat beträgt 1,9 Gew.-%, der Gesamtproteingehalt 9,3 Gew.-%. Das Gewichtsverhältnis von nichtblauem Protein (9,3 Gew.-% - 1,9 Gew.-% = 7,4 Gew.-%) zu Phycocyanin beträgt 7,4:1,9 = 3,9:1, der Anteil des Phycocyanins am Gesamtprotein also 1,9/9,3 = 20,4 Gew.-%.

Es wurden je 10 g der nach den Beispielen 1 bis 3 erhaltenen grünen, türkisen und blauen Extrakte in 1 kg Gelatinemasse gegeben. Nach 6 Monaten bei 20 °C ist keine Geschmacks- oder Geruchsveränderung zu beobachten.

**Patentansprüche**

1. Zusammensetzung, umfassend einen Extrakt aus Spirulina, welcher mindestens ein nichtblaues Protein und mindestens ein Phycocyanin enthält, **dadurch gekennzeichnet, dass** der Phycocyaningehalt 16 bis 40 Gew.-%, bezogen auf den Gesamtproteingehalt, der Phycocyaningehalt 0,5 bis 2 Gew.-%, bezogen auf die Gesamtzusammensetzung, und der Gesamtproteingehalt der Zusammensetzung 5 bis 20 Gew.-%, bezogen auf die Gesamtzusammensetzung, beträgt.

2. Zusammensetzung nach Anspruch 1, **dadurch gekennzeichnet, dass** sie weiterhin mindestens ein Chlorophyll enthält.

3. Zusammensetzung nach Anspruch 2, **dadurch gekennzeichnet, dass** sie 0,05 bis 0,3 Gew.-% Chlorophyll, bezogen auf die Gesamtzusammensetzung, enthält.

4. Zusammensetzung nach mindestens einem der Ansprüche 1 bis 3, **dadurch gekennzeichnet, dass** sie weiterhin Carotinoide, Safflowerblütenblätterextraktkonzentrat, Gardeniagelb-Extraktkonzentrat oder Gemische daraus enthält

5. Verfahren zum Herstellen einer Zusammensetzung nach mindestens einem der Ansprüche 1 bis 4, **dadurch gekennzeichnet, dass**

   - Spirulinapulver in Wasser zu einer Suspension aufgeschlämmt wird,
   - die Suspension unter Durchleiten von Luft gerührt wird und
   - die festen Bestandteile der Suspension anschließend abgetrennt werden,

   um einen Rohextrakt zu erhalten.

6. Verfahren nach Anspruch 5, **dadurch gekennzeichnet, dass** das Spirulinapulver mit Wasser im Gewichtsverhältnis von 1:20 bis 1:40 vermischt wird.

7. Verfahren nach mindestens einem der Ansprüche 5 oder 6, **dadurch gekennzeichnet, dass** die Suspension für 3 bis 36 h bei 5 bis 30 °C unter Durchleiten von Luft gerührt wird.

8. Verfahren nach mindestens einem der Ansprüche 5 bis 7, **dadurch gekennzeichnet, dass** der Rohextrakt zur weiteren Aufreinigung filtriert wird, mit einem Stabilisator versetzt wird und in einem Verdampfer bei 50 bis 70 °C und 10 bis 100 mbar zu einem Konzentrat eingedampft wird.

9. Verwendung der Zusammensetzung nach mindestens einem der Ansprüche 1 bis 4 zur Färbung von Lebensmitteln.

10. Verwendung nach Anspruch 9, **dadurch gekennzeichnet, dass** das Lebensmittel ein Getränk, eine Milchware, Eis, Süßware oder ein Überzug für Dragiergut ist.


**Claims**

1. A composition comprising an extract of Spirulina, which contains at least one non-blue protein and at least one phycocyanin, **characterized in that** the phycocyanin content is 16 to 40 wt% based on the total protein content, the phycocyanin content is 0.5 to 2 wt% based on the total composition and the total protein content is 5 to 20 wt% based on the total composition.

2. The composition according to claim 1, **characterized in that** the composition further contains at least one chlorophyll.

3. The composition according to claim 2, **characterized in that** the composition contains 0.05 to 0.3 wt% of chlorophyll based on the total composition.

4. The composition according to at least one of claims 1 to 3, **characterized in that** the composition further contains carotenoids, a Safflower petal extract concentrate, a Gardenia yellow extract concentrate or mixtures thereof.

5. A method for preparing a composition according to at least one of claims 1 to 4, **characterized in that**

   - Spirulina powder is suspended in water to form a suspension,
   - the suspension is stirred by passing air through and
   - the solid components of the suspension are subsequently separated off

   to form a crude extract.

6. The method according to claim 5, **characterized in that** the Spirulina powder is mixed with water in a weight ratio of 1:20 to 1:40.

7. The method according to at least one of claims 5 or 6, **characterized in that** the suspension is stirred for 3 to 36 h at 5 to 30 °C by passing air through.

8. The method according to at least one of claims 5 to 7, **characterized in that** the crude extract is filtered for further purification, is admixed with a stabilizer and evaporated into a concentrate in an evaporator at 50 to 70 °C and 10 to 100 mbar.

9. Use of the composition according to at least one of claims 1 to 4 for coloring foodstuffs.

10. The use according to claim 9, **characterized in that** the foodstuff is a beverage, a dairy product, ice cream, confectionery or a dragée coating.


**Revendications**

1. Composition comprenant un extrait de spiruline contenant au moins une protéine non bleue et au moins une phycocyanine, **caractérisée en ce que** la teneur en phycocyanine est comprise entre 16 et 40 % en poids par rapport à la teneur totale en protéines, la teneur en phycocyanine est comprise entre 0,5 et 2 % en poids par rapport à la composition totale et la teneur totale en protéines de la composition est comprise entre 5 et 20 % en poids par rapport à la composition totale.

2. Composition selon la revendication 1, **caractérisée en ce qu'**elle contient en outre au moins une chlorophylle.

3. Composition selon la revendication 2, **caractérisée en ce qu'**elle contient entre 0,05 et 0,3 % en poids de chlorophylle par rapport à la composition totale.

4. Composition selon au moins l'une quelconque des revendications 1 à 3, **caractérisée en ce qu'**elle contient en outre des caroténoïdes, un concentré d'extrait de pétales de carthame des teinturiers, un concentré d'extrait de jaune de gardénia ou des mélanges de ceux-ci.

5. Procédé de préparation d'une composition selon au moins l'une quelconque des revendications 1 à 4, **caractérisé en ce que**

   - la poudre de spiruline est mise en suspension dans de l'eau,
   - la suspension est agitée en y faisant passer de l'air et
   - les composants solides de la suspension sont ensuite séparés afin d'obtenir un extrait brut.

6. Procédé selon la revendication 5, **caractérisé en ce que** la poudre de spiruline est mélangée à de l'eau dans un rapport en poids compris entre 1:20 et 1:40.

7. Procédé selon au moins l'une quelconque des revendications 5 ou 6, **caractérisé en ce que** la suspension est agitée pendant une durée comprise entre 3 et 36 h à une température comprise entre 5 et 30°C en y faisant passer de l'air.

8. Procédé selon au moins l'une quelconque des revendications 5 à 7, **caractérisé en ce que** l'extrait brut est filtré en vue d'une purification supplémentaire, est mélangé avec un stabilisant et est évaporé dans un évaporateur à une température comprise entre 50 et 70°C et à une pression comprise entre 10 et 100 mbar afin de former un concentré.

9. Utilisation de la composition selon au moins l'une quelconque des revendications 1 à 4 pour colorer des aliments.

10. Utilisation selon la revendication 9, **caractérisée en ce que** l'aliment est une boisson, un produit laitier, une glace, une confiserie ou un enrobage pour produit dragéifié.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006210545 A
- JP 56086958 A
- WO 03080811 A
- EP 1798262 A
- WO 03099039 A

- DE 10059107
- JP 2003342489 A
- JP 2004027041 A
- JP 2006230272 A


**In der Beschreibung aufgeführte Nicht-Patentliteratur**

- **A. VONSHAK.** Spirulina platensis (Arthrospira). Taylor & Francis, 1997, 175-204
- **N. YOSHIKAWA ; A. BELAY.** Single Laboratory Validation of a Method for the Determination of c-Phycocyanin and Allophycocyanin in Spirulina (Arthrospira) Supplements and Raw Materials by Spectrophotometry. *J. AOAC Int.,* 2008, vol. 91 (3), 524-529

- Extraction and measurement of Total Lipids. **R. E. WROLSTAD et al.** Handbook of Analytical Chemistry, Measurement of Protein Content - Determination of total nitrogen. John Wiley & Sons, 2000, 105, , 425
- **HERRERA et al.** *J. Appl. Phycol.,* 1989, vol. 4, 325-331